# EUROPEAN PATENT APPLICATION

(11) **EP 1 994 908 A1**
(43) Date of publication of application: **26.11.2008**
(21) Application number: 08008813.1
(22) Date of filing: 13.05.2008
(51) Int. Cl.: A61C 1/08, A61C 8/00

(54) **Try-in implant**

(30) Priority: 21.05.2007 EP 07010034; 21.05.2007 EP 07010035
(71) Applicant: Straumann Holding AG, 4002 Basel (CH)
(72) Inventor: Lussi, Jost, 80006 Zürich (CH); Lazic, Miodrag, 4436 Oberdorf (CH); Zettler, Marc, 79539 Lörrach (DE)
(74) Representative: Schaad, Balass, Menzl & Partner AG

(57) **Abstract**

The present invention relates to a try-in implant (10) for verifying position and angulation of a pilot hole and thereby having an impression of the final implant position. Said try in implant (10) comprises a body portion (12) to be received in said pilot hole, a neck portion (13) formed above said body portion (12), and an attachment portion (14) formed above said neck portion (13). Said attachment portion (14) is angulated.

## Description

The present invention relates to a try-in implant for verifying position and angulation of a pilot hole.

When installing dental implants, the positioning of the implant is extremely important to obtain a good aesthetic and functional result. The positioning of the implant to a large extent determines the choice of prosthetic components. In order to provide guidance for the surgeon during the installation of an implant, various types of so-called surgical guide rails have traditionally been used. These guide rails are mainly produced under laboratory conditions and can be made in a number of different designs. As aids during the surgical intervention it is also possible to use so-called directional sensors.

US 5,208,845 discloses a radiographic depth gauge for positioning dental implants in a jaw bone. The gauge is formed of a material, which is x-ray visible, and is an elongated member with distance markings. The gauge both shows the depth and angulation of the drill hole relative to other holes and existing dentition.

US 5,842,859 discloses an indication device for marking and forming one or more attachment points for one or more fixtures, which can be fitted into a receiving hole in which it bears via a bearing part. At least one indicating part is interconnected with the protruding part and has a free end extending away from the existing hole, where a location of the new hole to be used as an attachment point is established at a position substantially adjacent to an exterior surface of the free end of the indicating part.

However, the devices known up to now have the disadvantage that the surgeon has no visual impression, which indicates the implant's prosthetic portion as well as the fact that they are difficult to handle due to their small size.

Therefore, it was a problem of the present invention to provide a try-in implant which indicates the exact geometry of the implant's prosthetic portion and which is easy and safe to handle.

The problem is solved by a try-in implant according to claim 1. Further preferred embodiments are subject of dependent claims 2 to 24.

Said try-in implant comprises a body portion to be received in a pilot hole, a neck portion formed above said body portion, and an attachment portion formed above said neck portion. The attachment portion is angulated. The try-in implant according to the present invention fulfills the needs of the surgeon by ensuring a safe handling and allowing a direct visual impression of the situation during the early phase of implant surgery allowing to adjust the position of the hole or to select the correct implant system.

Said try-in implant indicates the geometry of the implant's prosthetic portion. That means that it has the same shape as an implant (final implant) comprising an anchoring part with a threaded section, a neck portion as well as a mounting part. Due to the visual similarity of the try-in implant and the final implant, the surgeon has during the surgical intervention a visual impression of the situation after implantation which makes the decision easier, which implant has to be selected. An implant to be chosen may be a one-part implant or a two-part implant, with an angulated mounting part, and the length and/or diameter of the implant to be selected may also be determined.

The facial-lingual, mesial-distal, corona-apical and apical-incisal position as well as the distance to adjacent teeth and implants can be verified with a try-in implant according to the present invention. Functional and aesthetic long-term results can be predicted due to the use of such a try-in implant.

In a preferred embodiment of the present invention, the attachment portion comprises a handle to ensure easy and safe handling of said try-in implant. The handle on the attachment portion ensures that the try-in implant can easily be inserted in the pilot hole, that means the first receiving hole or drill hole, by hand or by tweezers without being lost in the patient's mouth.

In a preferred embodiment of the present invention, the handle is attached on the top or on the side of the attachment portion. Depending on his preferences, the surgeon may choose between try-in implants having the handle on the top or on the side of the attachment portion. Preferably, the handle is on the side of the attachment portion, since this allows a better estimation of the correct height. Further also an occlusal control is possible.

In another preferred embodiment of the present invention, the attachment portion has a partly or fully gripping surface to ensure that the try-in implant can not slip away during the handling procedure in the patient's mouth. Alternatively, the attachment portion comprises a suitable cavity to guarantee a safe handling of said try-in implant with an integrated handle. Said cavity may vary in size and shape. For example, it is such that the gripping ends of the tweezers fit into the cavity. These two embodiments are especially preferred, since such an "integrated handle" has no influence of the visual impression.

In another preferred embodiment of the present invention, the handle comprises an opening. This opening allows for the secure retaining of the try-in implant, especially inside the patient's mouth, to prevent aspiration of the try-in implant. A thread or floss may be inserted through the opening and held outside a patient's mouth. In addition, the thread or floss can be used to assist in removing the try-in implant.

In another preferred embodiment of the present invention, the attachment portion comprises a crown-like cap. Said try-in implant indicates the exact geometry of the implant's prosthetic portion together with the mounted crown. Due to the optical identity or similarity of the try-in implant and the tooth prosthesis, meaning the final implant and the mounted crown, the surgeon has during the surgical intervention a visual impression of the situation after implantation and restoration. A mounted crown can be rudimentary minimal (a crown framework) or like the final crown (a final porcelain veneering crown of average/generic shape). This enables an easier decision about the implant to be selected. Possible implants are one-part implants or two-part implants, which have an angulated mounting part, and the length and/or diameter of the implants to be selected may also be determined.

In a preferred embodiment of the present invention, the crown-like cap is an integral part of the attachment portion, preferably the whole try-in implant is formed in one piece. This can be obtained for example if the try-in implant is obtained by injection molding.

Alternatively, in a further embodiment of the present invention the crown-like cap is a separate component which is mounted on the attachment portion, for example by a snap fit assembly. Here, it is possible to mount different forms of crown-like caps on the attachment portion in order to determine the optimal shape of the crown.

Further it is also possible that crown-like cap and the attachment portion are one separate component which is mounted on the neck portion. In a further embodiment one separate component is formed by the crown-like cap, the attachment portion and the neck portion, which is mounted on the body portion.

In a further embodiment of the present invention the crown-like cap comprises a handle to ensure easy and safe handling of said try-in implant. The handle is preferable integrated on the top of the crown-like cap. The handle on the crown-like cap ensures that the try-in implant can easily be inserted in the pilot hole, that means the first receiving hole or drill hole, by hand or by tweezers without being lost in the patient's mouth, thereby ensuring a safe handling.

In a further embodiment of the present invention, the crown-like cap has a partly or fully gripping surface to ensure that the try-in implant can not slip away during the handling procedure in the patient's mouth.

In another preferred embodiment of the present invention the handle or the crown-like cap comprises an opening. This opening allows for the secure retaining of the try-in implant, especially inside the patient's mouth, to prevent aspiration of the try-in implant. A thread or floss may be inserted through the opening and held outside a patient's mouth. In addition, the thread or floss can be used to assist in removing the try-in implant.

Preferably, the try-in implants have the same diameters as the drills. That means that they have diameters from 1.0 to 8.0 mm, preferably consisting of the group of 2.2 mm, 2.8 mm, 3.0 mm, 3.5 mm, 4.2 mm, 5 mm and 5.5 mm. Especially preferred are those having a diameter from 2.0 to 3.0 mm, for example 2.2 mm and 2.8 mm.

In order to predict the optimal length of the implant, the body of try-in implant may have different length, preferably 6 mm and 8 mm. It is also possible that body portions of the try-in implants comprise a height indicator, designed with horizontal or lacuna markings. Such a height indicator makes it possible to decide whether an adjustment of the pilot hole is necessary, respectively which implant length has to be chosen.

Preferably, the try-in implants according to the present invention have, depending on their diameter and size, a specific color, which serves as color code. Alternatively they have a tooth-like colour to support the visual impression.

In one embodiment of the present invention, the try-in implant comprises mainly a metal selected from the group consisting of titanium, zirconium, stainless steel preferably titanium or stainless steel. Alternatively the implants comprise an alloy of metals selected from the group consisting of cobalt, chromium, titanium, zirconium, niobium, hafnium or tantalum. Most preferred are 316 stainless steel, Ti6A14V, Ti6A17Nb and a Cr-Co alloy.

In another embodiment of the present invention, the try-in implant is made of a synthetic material. The synthetic material is selected from the group consisting of ceramic such as aluminium oxide or zirconium oxide, composite materials as well as polymers, especially biocompatible USP Class 6 compliant polymers, such as PEEK (polyetheretherketone), POM(polyoxymethylene), Grilamid TR 70 LX of EMS, PEI of Sulzer Medica (polyethylene imine), PTFE (polytetrafluorethylene), PP (polypropylene), PMP (Polymethylpenten), PPSU (polyphenylsulfone), PE (polyethylene), and PC (polycarbonate). Preferably the implant is made of PEEK or POM.

Typically, series of x-rays are taken in order to determine where and how to position implants in the jaw bone without damaging surrounding structures such as the nerves in the lower jaw bone and the sinuses adjacent to the upper jaw bone. Based on said x-ray, the pilot hole is drilled in the jaw bone. If, according to a further embodiment of the present invention, the try-in implant is made of a metal or synthetic material, which is X-ray visible, a further x-ray can be taken to determine the angulation of the pilot hole relative to existing dentition and the depth of the pilot hole relative to anatomical restriction. A possible synthetic material, which is X-ray visible, is BaSO₄ containing PEEK or ZrO₂ itself. X-ray visibility of the try-in implant according to the present invention permits optimal selection of the implant (one-part vs. two-part, as well as length of the implant) as well as the precision placement of implants to their maximum depth in the jaw bone to assure a maximum strength supporting for one or more dental restorations.

In one embodiment of the present invention, the try-in implants can be sterilized and therefore be used several times. Alternatively, it is possible to produce the try-in implants made of a synthetic material as one-way product guaranteeing a sterile product, which is highly desired by consumers due to infection risks such as HIV or hepatitis.

The invention is explained below on the basis of figures and illustrative embodiments, without in any way limiting the invention to the embodiments shown. The drawings show the following:
- Fig. 1: an angulated one-part implant according to the state of the art;
- Fig. 2: an angulated implant with a crown;
- Fig. 3: a side view of a first embodiment of a try-in implant according to the invention;
- Fig. 4: a side view of an embodiment of a try-in implant according to the invention, wherein a handle is attached to the top of the attachment portion;
- Fig. 5: a side view of an embodiment of a try-in implant according to the invention, wherein a handle is attached to the side of the attachment portion;
- Fig. 6: a side view of a further embodiment of a try-in implant according to the invention, wherein the attachment portion has a gripping surface;
- Fig. 7: a side view of a further embodiment of a try-in implant according to the invention with an opening to prevent aspiration of the try-in implant;
- Fig. 8: a side view of the embodiment shown in Figure 7 with thread or floss;
- Fig. 9: a side view of a further embodiment of a try-in implant according to the invention, wherein the attachment portion comprises a crown-like cap;
- Fig. 10: a side view of a further embodiment of a try-in implant, wherein the crown-like cap is an integral part of the attachment portion
- Fig. 11: a side view of a further embodiment of a try-in implant according to the invention, wherein the crown-like cap is mounted on the attachment portion by a snap fit assembly.

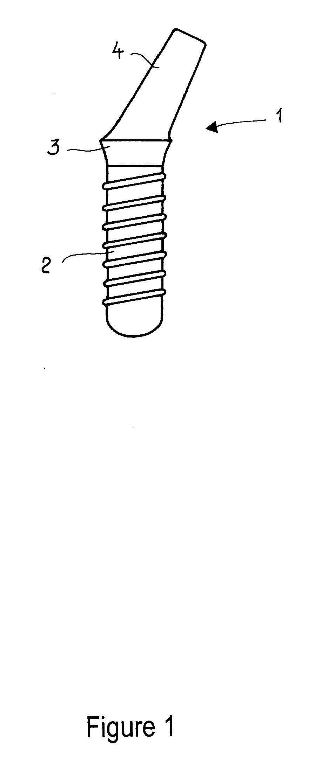

Figure 1 shows one possible embodiment of a final implant in form of an angulated one-part implant 1 according to the state of the art. It comprises an anchoring part 2 with a threaded section, a neck part 3 and a mounting part 4.

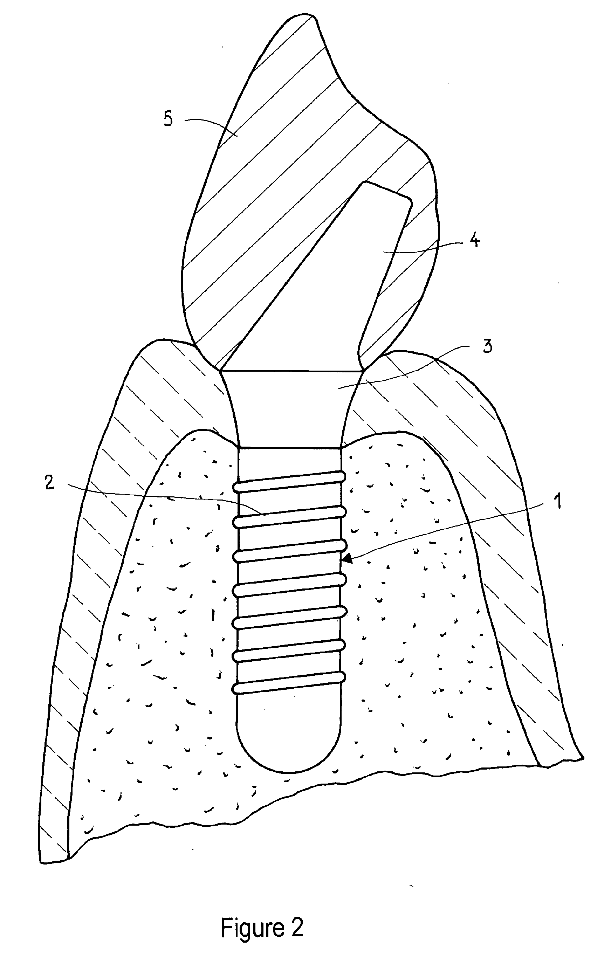

Figure 2 shows an angulated final implant 1 with a mounted crown 5 according to the state of the art. It comprises an anchoring part 2 with a threaded section, a neck part 3 and a mounting part 4. On the mounting part 4, the crown 5 is attached.

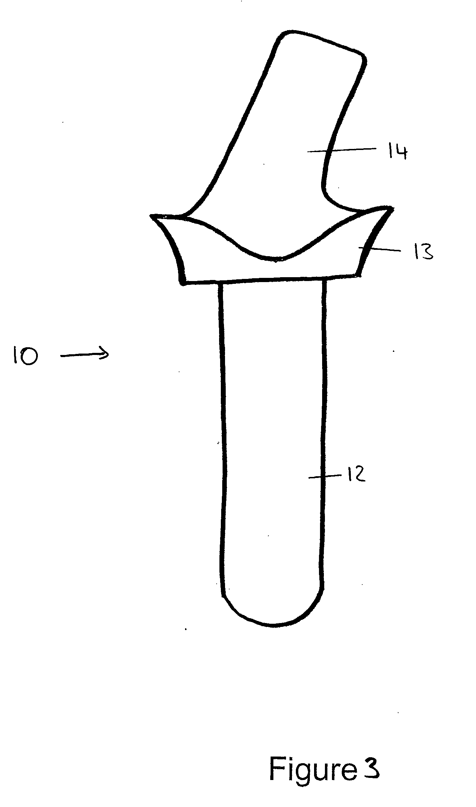

Figure 3 shows a try-in implant 10 according to the present invention with an angulated attachment portion 14. Said try-in implant 10 comprises a body portion 12 to be received in a pilot hole. The body portion 12 having a length of about 6 to 8 mm corresponds to the drill hole and subsequently the anchoring part 2 of the final implant. At the upper end of the body portion 12, a neck portion 13 having a length of about 1 mm is formed, which may comprise a slightly enlarged conical section. Above said neck portion 13, an attachment portion 14 having a length of about 1 to 6 mm is formed, which corresponds to the mounting part 4 of the final implant. Such a try-in implant 10 allows a direct visual impression of the situation during the early phase of implant surgery, indicating the geometry of the implant's prosthetic portion, which allows to adjust the position of the hole or to select the correct implant system. The try-in implant 10 is made of a biocompatible metal or synthetic material as mentioned above. Preferably it is made of PEEK or POM.

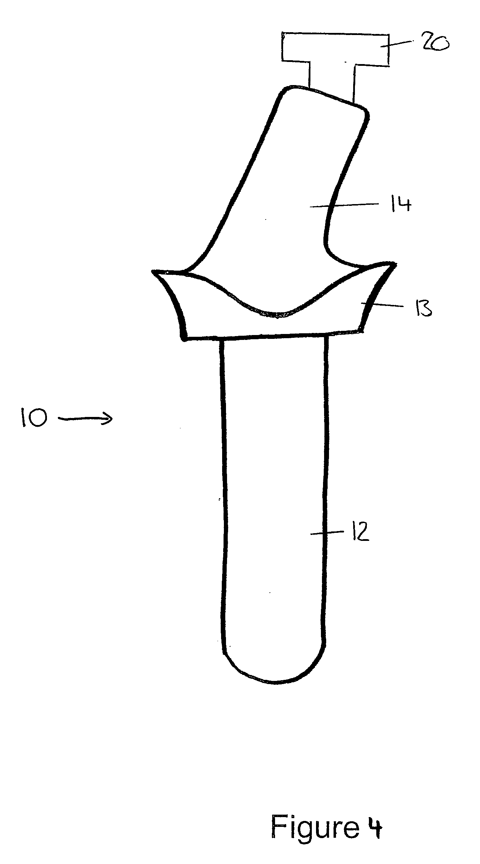

Figure 4 shows a further embodiment of a try-in implant 10, which again comprises a body portion 12, a neck portion 13 and an attachment portion 14. Said attachment portion 14 comprises a handle 20, which ensures easy and safe handling of said try-in implant 10. The handle may have various forms, which can easily be gripped by hand or by tweezers, such as T-shape, triangular, rectangular, squarish or semicircular. Preferably, the handle has a gripping surface. In the embodiment shown in Figure 4, the handle 20 is mounted on the top of the attachment portion 14.

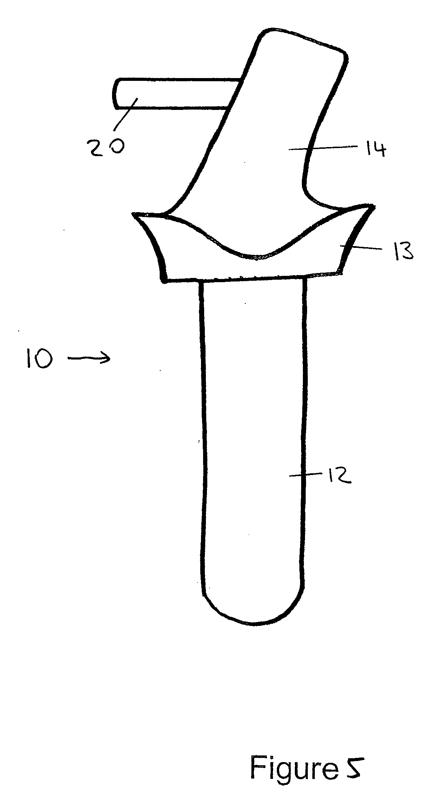

Figure 5 shows a slightly modified embodiment of a try-in implant 10, which again comprises a body portion 12, a neck portion 13 and an attachment portion 14. The handle 20 is mounted on the side of the attachment portion 14.

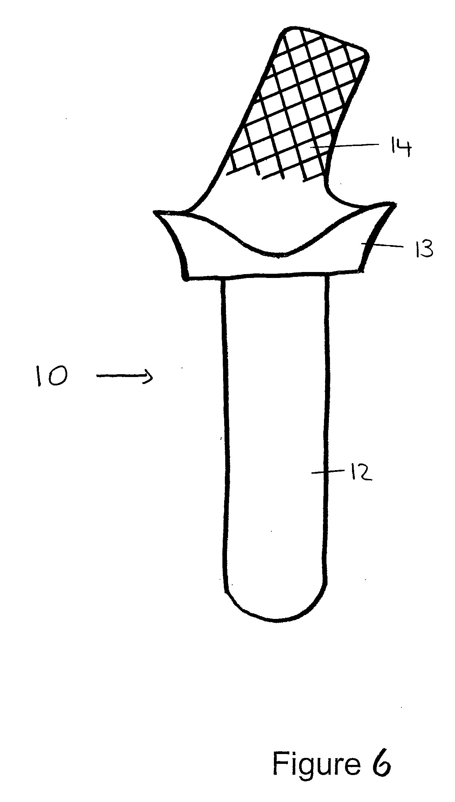

Figure 6 shows a try-in implant 10 comprising a body portion 12, a neck portion 13 and an attachment portion 14. The attachment portion 14 of the embodiment shown in Figure 6 has a gripping surface, in order to ensure an optimal gripping of the try-in implant 10.

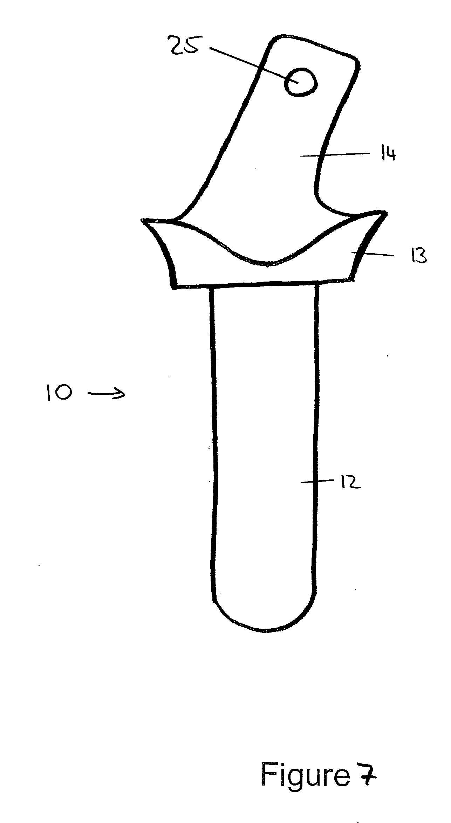

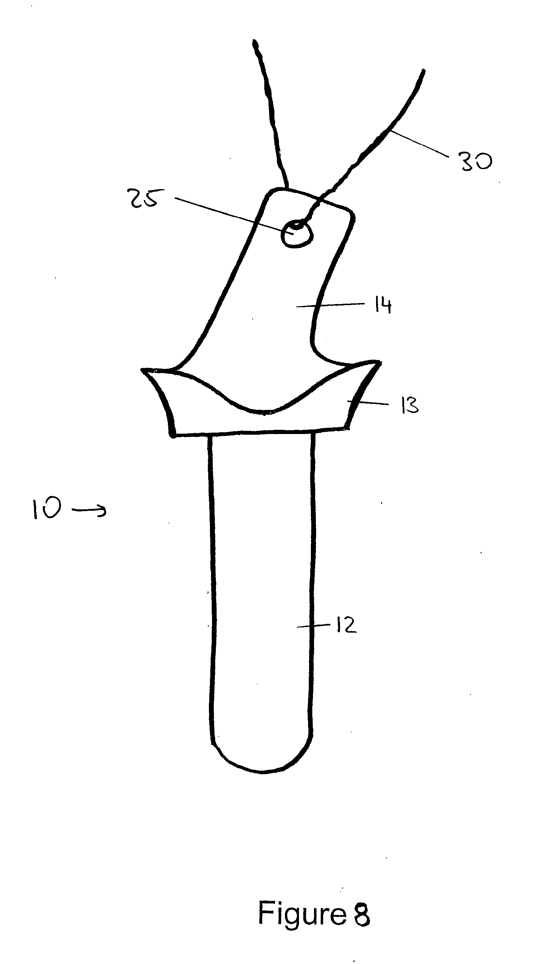

Figure 7 shows a try-in implant 10 comprising a body portion 12, a neck portion 13 and an attachment portion 14. The attachment portion 14 comprises an opening 25. This opening 25 allows for the secure retaining of the try-in implant 10, especially inside the patient's mouth, to prevent aspiration of the try-in implant 10. A thread or floss 30, as shown in Figure 8, may be inserted through the opening 25 and held outside the patient's mouth. Additionally, the thread or floss 30 may be used to assist in removing the try-in implant 10 in a safe and quick way.

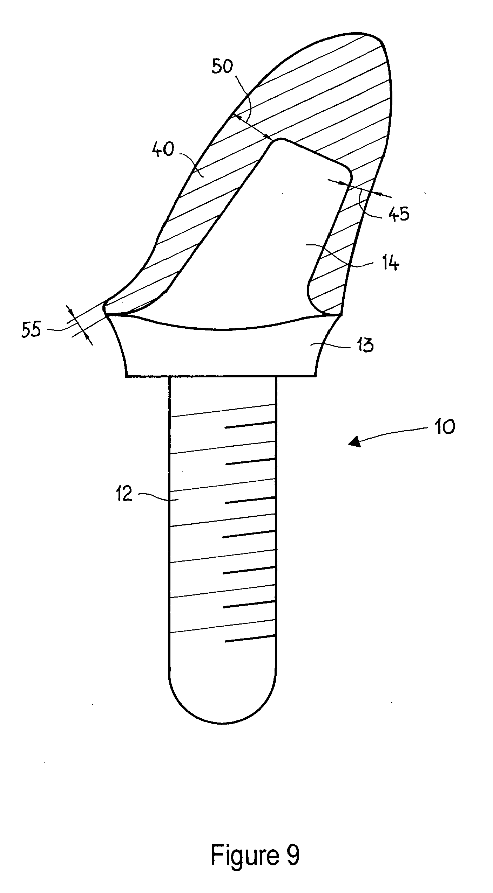

Figure 9 shows a further embodiment of the try-in implant 10 according to the present invention. Said try-in implant 10 comprises a body portion 12 to be received in a pilot hole. The body portion 12 corresponds to the anchoring part 2 with a threaded section of the final implant 1. At the upper end of the body portion 12, a neck portion 13 is formed, which may comprise a slightly enlarged conical section, with a sufficient length to project through mucosal tissue above the pilot hole. Above said neck portion 13, an attachment portion 14 is formed, which corresponds to the mounting part 4 of the final implant 1. Said attachment portion 14 comprises a crown-like cap 40, resulting in a visual impression, which corresponds to the situation after the implantation and restoration. The crown-like cap 40 may have various forms corresponding to the different teeth, that is, the form of a premolar crown, incisor crown, rudimentary framework, generic shape etc. In Figure 9, an incisor crown-like cap 40 is shown. According to the embodiment of the present invention shown in Figure 9, the crown-like cap may be a separate component of the try-in implant. That means that it can be attached on the attachment portion 14 before inserting in the pilot whole. Depending on the situation in the patient's mouth, the surgeon may select from crown-like caps 40 with different wall thickness, whereby said wall thickness depends on minimal framework versus complete crown and on material of crown (metal or ceramics). The wall thickness on the side side 45 of the crown-like cap 40 varies from 0.3 mm to 2 mm, the wall thickness 50 of the crown-like cap 40 varies from 0.5 mm to 2 mm, and the wall thickness at the bottom 55 of the crown-like cap 40 varies from 0.05 to 0.5 mm.

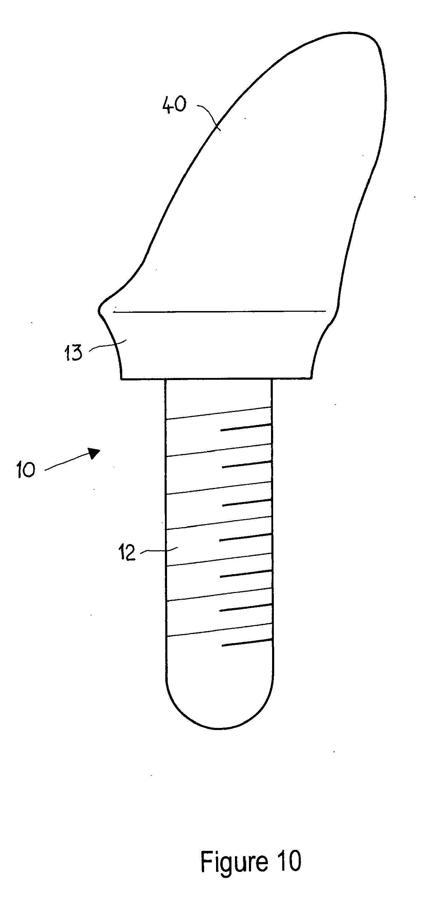

Figure 10 shows an embodiment according to the present invention, which is only slightly different from that shown in Figure 9. The crown-like cap 40 is an integral part of the attachment portion 14. Preferably the whole try-in implant 10 is formed in one piece. Such a try-in implant 10 can be produced at low cost, which is especially preferred if the try-in implant 10 is designed as one-way product.

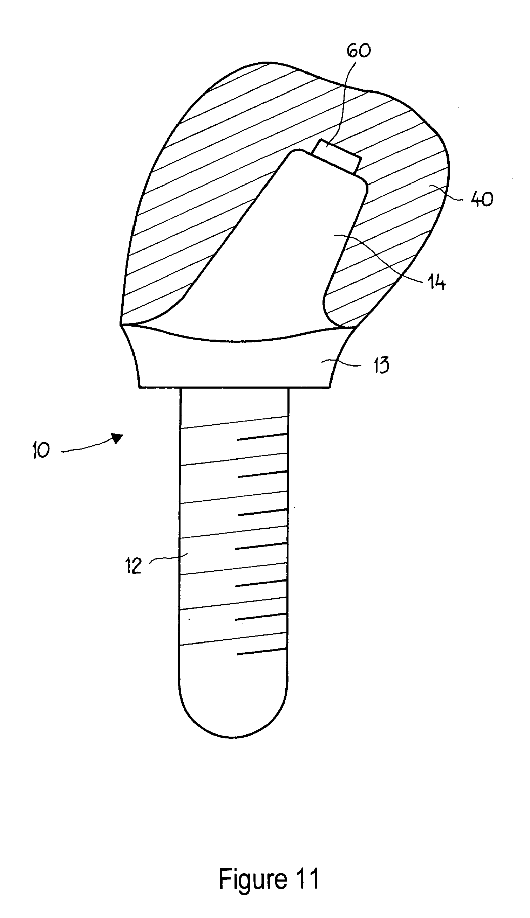

Figure 11 shows a further embodiment of the present invention, wherein the crown-like cap 40 is a separate component. Said crown-like cap 40 is attached to the attachment portion by a snap-fit assembly 60, which ensures that the crown-like cap 40 does not shift away in the patient's mouth.

## Claims

1. Try-in implant (10) for verifying position and angulation of a pilot hole, said try-in implant (10) comprising
a body portion (12) to be received in said pilot hole, a neck portion (13) formed above said body portion, and an attachment portion (14) formed above said neck portion, **characterized in that**
the attachment portion (14) is angulated.

2. Try-in implant (10) according to claim 1, **characterized in that** the attachment portion (14) comprises a handle (20), the handle (20) preferably being attached on the top of the attachment portion (14) or on the side of the attachment portion (14).

3. Try-in implant (10) according to claim 1, **characterized in that** attachment portion (15) has a partly or fully gripping surface.

4. Try-in implant (10) according to claim 1, **characterized in that** the attachment portion (14) comprises a cavity.

5. Try-in implant (10) according to claim 2, **characterized in that** the handle (20) comprises an opening (25) for the secure retaining of the try-in implant (10) to prevent aspiration of the try-in implant (10).

6. Try-in implant (10) according to any of the preceding claims, **characterized in that** the attachment portion (14) comprises a crown-like cap (40).

7. Try-in implant (10) according to claim 6, **characterized in that** the crown-like cap (40) is an integral part of the attachment portion (14).

8. Try-in implant (10) according to claim 6, **characterized in that** the crown-like cap (40) is mounted on the attachment portion (14), preferably by a snap fit assembly (60).

9. Try-in implant (10) according to one of claims 6 to 8, **characterized in that** the crown-like cap (40) comprises a handle (20).

10. Try-in implant (10) according to one of claims 6 to 8, **characterized in that** the crown-like cap (40) has a partly or fully gripping surface.

11. Try-in implant (10) according to claim 9, **characterized in that** the handle (20) comprises an opening (25) for the secure retaining of the try-in implant (10) to prevent aspiration of the try-in implant (10).

12. Try-in implant (10) according to claim 6, **characterized in that** the crown-like cap (40) comprises an opening (25) for the secure retaining of the try-in implant (10) to prevent aspiration of the try-in implant (10).

13. Try-in implant (10) according to any of the preceding claims, **characterized in that** the body portion (12) has a length of 6 to 8 mm.

14. Try-in implant (10) according to any of the preceding claims, **characterized in that** the body portion (12) comprises height indicators.

15. Try-in implant (10) according to any of the preceding claims, **characterized in that** the body portion (12) has a diameter from 1.0 to 8.0 mm.

16. Try-in implant (10) according to any of the preceding claims, **characterized in that** the try-in implant (10) is made of metal or a synthetic material, preferably of a synthetic material selected from the group consisting of ceramic, composite materials, and polymers, preferably polymers selected from the group consisting of PEEK, POM, Grilamid TR 70 LX, PEI, PTFE, PP, PMP, PPSU, PE, and PC, more preferably of PEEK or POM.

17. Try-in implant (10) according to claim 16, **characterized in that** the synthetic material is X-ray visible.

18. Try-in implant (10) according to any of the proceeding claims, **characterized in that** it can be sterilized.

19. One-way try-in implant (10) according to claim 16 or 17.
